**Europäisches Patentamt**

(19) **European Patent Office**

**Office européen des brevets**

(11) Numéro de publication: **0 306 418**
**B1**

(12) **FASCICULE DE BREVET EUROPEEN**

(45) Date de publication du fascicule du brevet:
**10.10.90**

(21) Numéro de dépôt: **88420291.2**

(22) Date de dépôt: **30.08.88**

(51) Int. Cl.⁵: **B29C 67/22,** B29C 35/02
// (B29K75/00, 63:00)

(54) **Procédé perfectionné pour la fabrication d'une structure moulée élastique complexe du type sandwich.**

(30) Priorité: **04.09.87 FR 8712464**

(43) Date de publication de la demande:
**08.03.89 Bulletin 89/10**

(45) Mention de la délivrance du brevet:
**10.10.90 Bulletin 90/41**

(84) Etats contractants désignés:
**AT CH DE ES FR GB IT LI NL SE**

(56) Documents cités:
**DE-A- 2 130 279**
**DE-A- 3 120 459**
**DE-B- 1 069 865**
**FR-A- 2 435 343**
**US-A- 3 940 468**

(73) Titulaire: **SKIS ROSSIGNOL S.A., Rue Butterlin,
F-38200 Voiron(FR)**

(72) Inventeur: **Macaire, Roger, Lieu dit Moulx,
F-38210 Tullins(FR)**
Inventeur: **Beaudoing, Michel, L'Etraz Domancy,
F-74700 Sallanches(FR)**

(74) Mandataire: **Laurent, Michel et al, Cabinet LAURENT et
GUERRE 20, rue Louis Chirpaz B.P. 32, F-69131 Ecully
Cédex(FR)**

ACTORUM AG

## Description

L'invention concerne un procédé pour la fabrication d'une structure moulée complexe énoncé dans le préambule de la revendication 1. Un procédé de ce genre est connu par le document DE-A 2 130 279.

Dans la suite de la description et dans les revendications, les expressions "nappes textiles" et "nappes de renfort" englobent non seulement les nappes individuelles de fils parallèles unidirectionnels, éventuellement superposés, mais également les étoffes bidirectionnelles, telles que : tissus (tissés, tricotés ou cousus), des grilles, des tresses, ainsi que des voiles, des étoffes non tissées et des complexes réalisés à partir de tels ensembles, notamment par aiguilletage, couture ou autre.

Pour la fabrication de lames composites de flexion, on a déjà suggéré d'empiler des nappes unidirectionnelles enrobées de résine non-polymérisée (ensembles dénommés fréquemment "nappes pré-imprégnées" ou "prepregs", de mettre l'ensemble dans un moule pour obtenir en pressant la compaction du matériau et enfin de chauffer pour provoquer le durcissement de la résine. On obtient de la sorte un matériau composite quasi-homogène, susceptible de remplacer des lames de ressort en acier.

Malheureusement, cette technique reste coûteuse et le matériau obtenu est lourd, ce qui en limite considérablement les débouchés industriels.

On a également proposé de réaliser des lames composites par assemblage d'un noyau en résine thermodurcissable rigide expansée, avec au moins une nappe de renfort destinée à apporter de la résistance mécanique à la structure, notamment lors des sollicitations, le noyau allégeant la structure.

Il existe plusieurs procédés industriels d'assemblage de ces lames composites.

Le procédé par collage des éléments unitaires à chaud sous pression, bien qu'exploité, est long, coûteux et engendre des contraintes aléatoires dans la structure composite finale.

Le procédé dit, "par voie humide" (voir par exemple le document de brevet DE-A 2 130 279 précité) consiste à mettre en place dans le moule des nappes fraîchement imprégnées d'une première résine thermodurcissable, notamment une résine époxyde, puis un noyau léger, par exemple en bois ou en mousse expansée en un autre matériau thermodurcissable rigide, par exemple en polyuréthanne. Lors du pressage de l'ensemble à chaud, la première résine de stratification sert de colle, et les nappes adhèrent ainsi au noyau. Cette technique, également exploitée, donne une bonne adhésion des constituants entre eux, mais elle reste encore longue et coûteuse. En outre, la mise en œuvre de nappes de renfort fraîchement imprégnées nécessite d'utiliser ces nappes dans les plus brefs délais (quelques minutes) et reste difficile à automatiser du fait du toucher poisseux de ces étoffes. Cette technique se révèle particulièrement coûteuse compte tenu qu'il n'y a pas possibilité d'automatisation du fait du caractère pégueux des nappes imprégnées.

On a alors suggéré de remplacer ces nappes fraîchement imprégnées d'emploi délicat, par des nappes préimprégnées, c'est-à-dire des nappes enduites de résine non polymérisée, mais peu ou pas poisseuse au toucher. Par exemple, dans le brevet français FR-A-2 435 343, on a décrit un procédé de préparation d'objets ayant un coeur en mousse polyester recouvert d'une étoffe imprégnée de résine polyester en mettant à profit l'exothermicité de la réticulation de la mousse. Cette technique qui convient pour la fabrication de corps volumineux, soumis à peu de déformations, tels que les planches à voile, présente l'inconvénient d'être limitée au polyester et donc de ne présenter que de faibles capacités d'adhérence et d'expansion, et par conséquent une densité élevée.

On a alors suggéré de disposer préalablement dans un moule des nappes prépolymérisées, donc rigides, de textiles de renfort et de mécanisation, puis d'injecter dans ce moule les constituants monomères liquides d'une résine thermodurcissable rigide expansée, par exemple des isocyanates et des composés polyhydroxylés, afin de préparer une mousse de polyuréthanne. Par exemple, dans le brevet américain US-A-3 940 468, on a décrit un procédé du type en question dans lequel, pour favoriser l'adhérence de l'étoffe textile de renfort à un noyau rigide en mousse de polyuréthanne, on fait appel à des résines d'imprégnation en polyester de caractéristiques particulières, en mettant à profit également l'exothermicité de la réaction de polymérisation de la mousse. Cette technique fort longue, présente les mêmes inconvénients que précédemment du fait de la pégosité des nappes imprégnées de polyester. En outre, cette technique ne permet pas d'incorporer dans l'ensemble d'autres éléments de rigidification, tels que des lames d'acier, car les faibles propriétés adhésives des résines, polyester notamment, n'assurent pas un collage suffisant de ces éléments entre eux.

L'invention pallie ces inconvénients. Elle vise un procédé perfectionné pour la fabrication d'une structure moulée complexe élastique du type sandwich, comprenant un noyau expansé, donc léger, rigide, renforcé par des nappes textiles qui adhèrent fermement au noyau, qui soit facile à mettre en œuvre, rapide et économique, qui puisse être automatisé, et qui conduise à des structures complexes présentant d'excellentes propriétés mécaniques, des contraintes induites faibles donc reproductibles, et par voie de conséquence donne des structures homogènes.

Ce procédé pour la fabrication d'une structure moulée élastique complexe du type sandwich, constitué par un noyau de mousse de polyuréthanne entouré d'une peau, et dont partie du moins est armée d'une nappe textile de renfort imprégnée d'une résine époxyde adhérant à la dite mousse de polyuréthanne, consiste:

– à déposer dans un moule destiné à être fermé par un couvercle, et au voisinage de chacune des deux faces principales intérieures de ce moule, un ensemble de renfort comprenant un élément de rigidification et des nappes textiles imprégnées d'une résine époxyde;

– à fermer le couvercle du moule de manière à définir avec ledit ensemble un volume correspondant au volume du noyau à réaliser;

– puis, à injecter dans le volume ainsi défini, un polyol et un isocyanate, réagissant pour former la mousse de polyuréthanne qui s'expanse in-situ selon une réaction exothermique;

– puis, à laisser refroidir le contenu du moule;

– et enfin, à ouvrir le moule pour retirer la structure moulée complexe élastique obtenue.

Le procédé conforme à l'invention se caractérise en ce que les nappes textiles de renfort sont préimprégnées par passage dans un bain de résine époxyde sans solvant, puis essorage et pré-durcissement par mûrissement à température ambiante conduisant à des nappes non poisseuses à température ambiante.

En d'autres termes, l'une des originalités de l'invention consiste à avoir remplacé le tissu imprégné humide par un tissu préimprégné, connu certes par ailleurs, mais en ayant eu soin de choisir dans l'ensemble des préimprégnés, les prepegs époxydes non poisseux à température ambiante et sans solvant, qui, en combinaison avec la mousse de polyuréthanne, coopèrent à l'interface avec l'élément de rigidification, constituant de la sorte un ensemble adhérant, permettant à la structure complexe obtenue d'accepter des déformations de grande amplitude sans générer de déformations permanentes ni entraîner de phénomènes de délaminage.

Dans le brevet US - A - 3 940 468 sus-mentionné, faisant appel à un élément textile imprégné de polyester, on ne peut pas, comme déjà dit, incorporer un élément de rigidification, notamment métallique, sans risque de délaminage.

Durant son expansion, puis son durcissement, la mousse engendre une réaction exothermique et provoque une élévation importante de pression dans le moule et contre les parois du moule, ce qui a pour effet de plaquer les nappes de renfort et de rigidification contre les parois du moule et par là, des les amener au voisinage de la surface de la structure composite.

La réaction chimique qui se produit après la phase d'injection et durant l'expansion doit être nécessairement exothermique. La mousse ainsi formée adhère donc de ce fait aux nappes textiles de renfort. La chaleur ainsi dégagée par cette réaction contribue à déclencher la réaction de durcissement de la résine d'imprégnation non réticulée des nappes de renfort. Le durcissement complet de la mousse intervient avant le durcissement complet de cette résine, qui elle, peut être à son tour totalement réticulée en chauffant de manière complémentaire le moule. On peut bien évidemment démouler la pièce quand la mousse est durcie et quand la résine commence seulement à durcir, pour en achever la cuisson dans une étuve. La liaison intime entre la seconde résine d'imprégnation qui constitue la matrice de la nappe de renfort et la première résine expansée, assure des collages excellents entre les différents éléments constitutifs de la structure complexe.

Grâce à l'invention, on peut donc réaliser des structures moulées complexes élastiques, tout en s'affranchissant toutefois des inconvénients du procédé d'assemblage dit "par voie humide" et des inconvénients du procédé d'injection d'un noyau en mousse. De plus, la présente invention est particulièrement avantageuse pour la réalisation de lames, poutres, ainsi que pour toute structure soumise à des sollicitations de forte amplitude, et pour lesquelles on recherche une déformation permanente très réduite, voire nulle.

Dans la description et les revendications, par l'expression "non poisseux", on désigne un produit qui à température ambiante ne colle pas aux doigts.

Avantageusement, en pratique:

– la nappe textile de renfort est choisie dans le groupe comprenant les nappes unidirectionnelles, les nappes bidirectionnelles: étoffes, tissus, grilles non tissées, nappes tricotées-cousues, et est constituée par des fibres minérales ou synthétiques à haute performance mécanique choisies dans le groupe comprenant le verre, le bore, le carbone, les polyaramides, seuls ou en mélange;

– l'élément de rigidification est constitué par une plaque en aluminium;

– l'élément de rigidification est choisi dans le groupe constitué par une plaque d'acier, un lamifié phénolique, une structure stratifiée rigide pré-polymérisée;

– dans le cas d'un moule ayant la forme d'une lame à section transversale rectangulaire, on dépose la première nappe textile de renfort et le premier élément de rigidification au fond du moule, puis on dépose orthogonalement à cet ensemble selon les deux flancs latéraux du moule des plaques rigides, de manière à former deux chants sur lesquels on dépose le deuxième élément de rigidification et le deuxième élément textile de renfort;

– on complète l'élévation de température de la réaction exothermique révélant les propriétés adhésives par un chauffage complémentaire du moule;

– les faces externes respectivement de la première et de la deuxième nappes textiles de renfort préimprégnées sont recouvertes d'une feuille de matière plastique.

Dans une variante d'exécution, la pré-imprégnation de la nappe textile de renfort peut etre effectuée in-situ en plaçant dans le moule un empilement de nappes textiles et de feuilles ou films de résine époxyde, qui se disperse alors dans la nappe lors de l'élévation ultérieure de température.

Dans une autre variante, on peut disposer également dans le cœur du moule une structure textile tubulaire de renfort ajourée. De la sorte, cette structure est noyée dans le noyau expansé et épouse généralement une section cylindrique ou ovoïde, ce qui procure à la structure moulée de la résistance à la torsion longitudinale et améliore la résistance à la flexion latérale.

Dans une autre forme d'exécution, la structure peut comporter des éléments visco-élastiques absorbant les vibrations, tels que par exemple une feuille d'élastomère, éventuellement localisés à des endroits appropriés, par exemple dans le cœur du noyau, ou encore entre les empilements de nappes de renfort, ou encore dans ces nappes de renfort.

Cette configuration est avantageuse lorsque l'on recherche un amortissement sélectif de certains modes vibratoires propres à la structure, tel que par exemple dans la fabrication des skis.

Le procédé selon l'invention est avantageusement mis en œuvre pour la fabrication d'un ski de structure complexe moulée de type "sandwich". Selon cette mise en œuvre, après avoir déposé au fond du moule le premier ensemble de renfort, à savoir respectivement une semelle, une nappe textile de renfort et un élément de rigidification:

– on dépose orthogonalement à cet ensemble selon les deux plans latéraux du moule des plaques rigides, de manière à former chants;

– on dépose sur cesdits chants un second élément de rigidification et une seconde nappe textile de renfort pré-imprégnée d'une résine époxyde sans solvant et non poisseuse à température ambiante;

– on dépose sur l'ensemble ainsi réalisé une lame en résine;

– puis, on injecte dans le volume ainsi défini un polyol et un isocyanate réagissant pour former la mousse de polyuréthanne qui s'expanse et se durcit in-situ selon une réaction exothermique;

– et enfin, on laisse refroidir le contenu du moule et on retire la structure ainsi obtenue.

La manière dont l'invention peut être réalisée et les avantages qui en découlent ressortiront mieux des exemples de réalisation qui suivent, donnés à titre incatif et non limitatif, à l'appui des figures annexées.

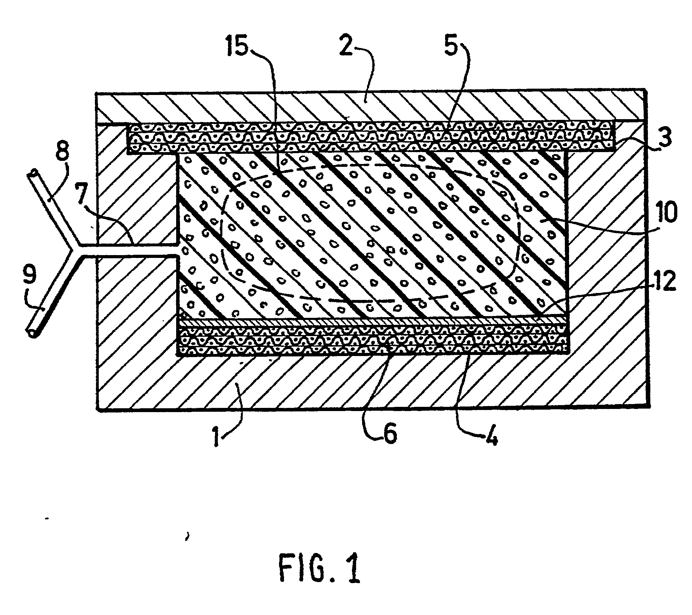

La figure 1 est une représentation schématique en coupe d'un moule d'injection conforme à l'invention.

La figure 2 est une représentation schématique éclatée d'un ski réalisé de manière conforme à la présente invention.

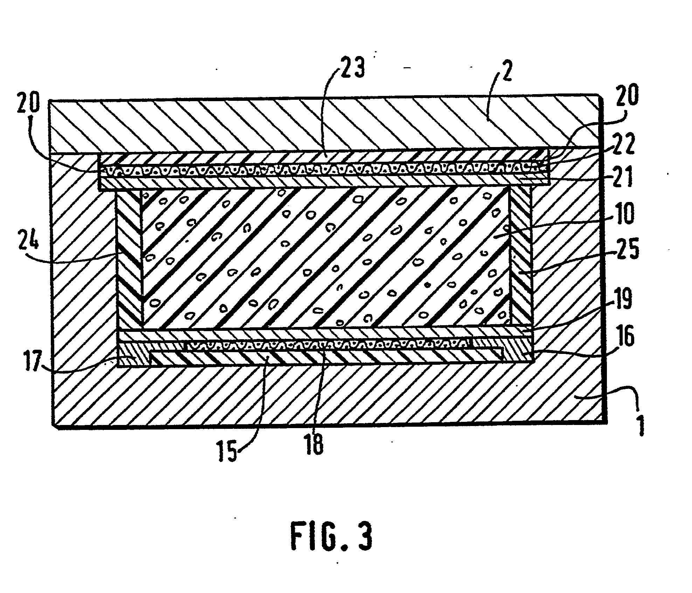

La figure 3 est une coupe transversale d'un ski conformément à la figure 2.

## Exemple 1 :

On utilise un moule, par exemple en acier, constitué par un parallélépipède (1) de 300 x 8 x 3 centimètres, fermé par un couvercle (2) et présentant sur le haut un décrochement (3).

Dans le fond (4) de ce moule et dans le décrochement (3), on place un empilement de trois tissus préimprégnés respectivement (5) et (6) en étoffes tricotées cousues en fibres de verre (marque déposée ROVINAP de Etablissement Les Fils d'Auguste Chomarat - Mariac-France) pesant environ 730 grammes au mètre carrré, préimprégnés plein bain d'une résine époxyde sans solvant à base de bis-phénol A contenant un agent durcisseur, tel qu'une amine aliphatique. Le taux de résine exprimé en résine par rapport au poids total tissu + résine est, après expression par foulardage, d'environ 25 %.

On stocke cette étoffe préimprégnée (prepreg) à température ambiante (25°C) pendant environ cinq heures pour assurer le mûrissement de la résine époxyde. On obtient alors un tissu imprégné sec, c'est-à-dire non poisseux, facile à découper en bandes et que l'on peut stocker plusieurs jours à température ambiante, voire plusieurs semaines à 5°C.

Par un canal (7) ménagé à cet effet dans les parois du moule, on injecte à partir de deux canalisations respectivement (8) et (9) dans une tête mélangeuse à haute pression, les monomères permettant de préparer la résine rigide expansée (10) in situ dans le moule. On injecte par exemple en (8) un polyol et en (9) un isocyanate pour obtenir un noyau (10) en polyuréthanne cellulaire rigide après expansion et durcissement.

Lorsque la réaction s'amorce in-situ dans le moule, il se forme de la mousse qui tend à occuper tout le volume disponible et à plaquer ainsi les étoffes (5,6) contre les parois respectivement supérieure (2) et inférieure (4). En outre et surtout, cette réaction est exothermique. On laisse réagir jusqu'à ce que la mousse soit expansée et commence à durcir. Pendant cette phase exothermique, on ramollit ainsi la résine d'imprégnation époxyde des nappes de renfort (5,6). Cette exothermie chauffe alors le moule et fait passer la résine d'imprégnation époxyde à l'état liquide, ce qui révèle les propriétés adhésives et mouillantes de cette résine et assure une bonne stratification de l'ensemble.

On maintient la température pendant quelques minutes pour assurer un bon durcissement.

Après refroidissement, on démoule. On obtient de la sorte des lames de 300 x 8 x 3 centimètres convenant parfaitement comme lames de flexion.

Il va de soi que l'injection de la mousse peut être effectuée soit sur un côté, soit à une extrémité du moule.

## Exemple 2 :

Avant l'injection de la première résine (10), on interpose sur l'empilement d'étoffes (6) pré-imprégnées disposées au fond (4) du moule (1) une plaque métallique conductrice (12) en alliage d'aluminium dénommé ZICRAL (marque déposée de CEGEDUR) de 1,5 mm d'épaisseur.

Ce type de renfort anisotrope va augmenter la rigidité en torsion, en flexion longitudinale et transversale de la poutre ainsi obtenue.

## Exemple 3 :

On répète l'exemple 1 en insérant dans le moule avant injection de la première résine (10) un élément tubulaire textile (15) fortement ajouré.

Après injection de la résine (10), on obtient ainsi à coeur un renfort (15) de forme ovoïde qui améliore la résistance à la torsion longitudinale et la résistance à la flexion latérale.

## Exemple 4 :

Lors de l'élaboration de l'étoffe tricotée-cousue (5,6) de renfort, on insère périodiquement dans celle-ci un fil élastomérique viscoélastique à haut coefficient d'amortissement.

On obtient ainsi des lames susceptibles de remplacer les lames de ressort en acier pour l'automobile.

## Exemple 5 :

On répète l'exemple 1 en insérant avant injection de la mousse (10) entre l'empilement supérieur (5) et cette mousse (10) une feuille élastomérique viscoélastique à haut coefficient d'amortissement.

On obtient ainsi des lames particulièrement adaptées à l'industrie automobile.

## Exemple 6 :

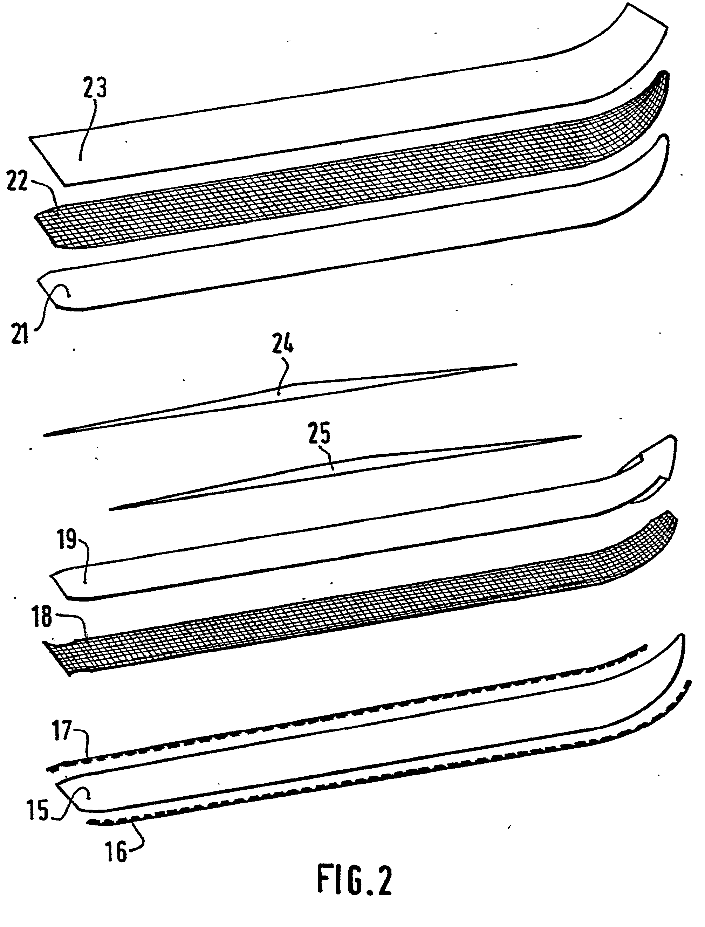

On réalise un ski selon la présente invention, les principaux éléments constitutifs de celui-ci étant représentés au sein de la figure 2 . Au préalable, on dépose au fond du moule une semelle (15) en polyéthylène d'une épaisseur de 10 à 12 dixièmes de millimètre. On place dessus cette semelle et de part et d'autre des parois latérales du moule (1) des carres (16) et (17) en acier, maintenus en place de manière connue, par exemple au moyen d'aimants permanents (non représentés) se trouvant sous le moule.

On dispose alors au-dessus de l'ensemble ainsi constitué une nappe de renfort rigide pré-imprégnée (18), réalisée en étoffe tricotée cousue en fibres de verre (marque déposée ROVINAP) dont la pré-imprégnation a été effectuée plein bain dans une résine époxyde. Comme dans l'exemple 1, on a stocké au préalable ce tissu pré-imprégné à température ambiante pendant environ cinq heures afin d'assurer le mûrissement de la résine époxyde, afin d'obtenir un tissu imprégné sec non poisseux. On place alors au dessus de cette nappe de tissu pré-imprégné (18) une lame en ZICRAL (19), de dimensions analogues à la nappe de renfort (18). Cette lame (19) est maintenue et plaquée fermement contre la nappe (18) au moyen de tiges métalliques longitudinales (non représentées) maintenues en place toujours au moyen des aimants permanents situés sous le moule.

On place alors sur un décrochement (20) du moule (1) une autre lame de ZICRAL (21) de caractéristiques analogues à la lame de ZICRAL (19).

On place au-dessus de cette lame (21) une nouvelle nappe de renfort semi-rigide pré-imprégnée de résine époxyde (22) de mêmes caractéristiques que la nappe (18).

Enfin, au-dessus de cette plaque, on dispose une lame en résine ABS (acryle butyle styrène) (23) destinée notamment à servir de support de décoration du ski.

On place également sur les faces latérales du volume laissé libre entre les deux lames de ZICRAL (19,21) et contre les parois du moule, deux chants (24) et (25) par exemple en polyéthylène, en ABS, en résine phénolique ou autres.

De même que dans l'exemple 1, on procède alors à l'injection, à partir d'une canalisation ménagée dans le moule, des monomères permettant de prépaer la résine polyuréthanne. La réaction s'amorçant in situ provoque tout d'abord l'expansion de la mousse, impliquant d'une part le placage des étoffes et des plaques respectivement (19) et (18) d'une part et (21,22) d'autre part, contre les parois respectivement inférieure et supérieure du moule. D'autre part, le dégagement de chaleur engendré par cette cette réaction de polymérisation provoque la réticulation de la résine époxyde contenue dans les nappes (18) et (22), permettant d'obtenir l'adhérence d'une part des plaques en ZICRAL (19) et (21) sur les nappes (18) et (22), d'autre part l'adhérence de la plaque en polyéthylène (15) sur la nappe (18) et l'adhérence de la plaque en ABS (23) sur la nappe (22).

La complète réticulation de la résine époxyde contenue dans les plaques (18) et (22) est réalisée par un chauffage complémentaire du moule.

Après refroidissement des moules, on obtient un ski présentant d'excellentes qualités de flexion.

## Exemple 7 :

On repète l'exemple 1 en remplaçant les trois nappes prepegs (5, 6) par une alternance de trois de ces nappes sèches prises en sandwich entre trois films de résine époxyde de 0,5 millimètre d'épaisseur.

Lors de l'élévation de la température, la résine fond et imprègne les nappes in-situ. On obtient des résultats analogues à ceux de l'exemple 1.

Il va de soi que la structure symétrique ainsi décrite peut être quelque peu modifiée. En effet, en fonction des souhaits de l'utilisateur, la présente invention s'applique parfaitement à la réalisation d'une structure dont la symétrie sera par exemple inversée. Cette structure présente alors sous la forme et dans l'ordre un élément de rigidification, notamment en Zicral, puis une nappe de renfort pré-imprégnée, puis le noyau de polyuréthanne, ensuite une nouvelle nappe de renfort pré-imprégnée et enfin une nouvelle lame de rigidification. Dans une autre forme de réalisation, il est tout à fait concevable d'envisager de part et d'autre du noyau de polyuréthanne une structure comprenant respectivement un élément de rigidification englobé entre plusieurs nappes de renfort pré-imprégnées, ou encore une alternance, régulière ou non, de nappes de renfort pré-imprégnées et d'éléments de rigidification.

Dans une autre forme de réalisation, on peut également envisager, dans le cadre d'un moule parallélépipédique, la présence d'une nappe de renfort imprégnée sur trois des faces du moule et la mise en place par les moyens décrits précédemment d'une lame de rigidification en l'occurrence en Zicral sur une seule de ces faces.

Les exemples décrits dans la description qui précède ne mentionnent que des lames de forme parallélépipédique, mais il va de soi que toute forme polygonale, cylindrique, en U, en V, entre dans le champ de la présente invention.

Le procédé selon l'invention présente de nombreux avantages par rapport aux techniques exploitées à ce jour. On peut citer :
- le fait que l'on met en oeuvre des pièces sèches non poisseuses, donc facilement manipulables, ce qui rend ce procédé automatisable ;
- l'absence de solvant dans la résine d'imprégnation des nappes, ce qui facilite les opérations, simplifie l'installation d'imprégnation et donc diminue l'investissement ;
- la simplicité, puisque l'on réalise une pièce finie en une seule opération, ce qui se traduit par une économie appréciable de moules ;
- la facilité d'incorporer des inserts ou de recouvrir les différentes faces latérales de la structure composite.

De la sorte, et comme déjà dit, ce procédé peut être utilisé avantageusement pour la fabrication de lames ou de poutres rigides ou de flexion, notamment lorsque l'on recherche de la raideur associée à de la légéreté, ou encore de la souplesse associée à de la robustesse et de la légèreté.

De telles lames ou de telles poutres peuvent recevoir de nombreuses applications, notamment dans l'industrie de l'automobile, dans l'aérospatial, dans l'aéronautique, dans le sport (raquettes de tennis, de squash, de badmigton, bâtons de skis, skis..), dans la construction et les travaux publics, pour la fabrication de panneaux et d'éléments de châssis, notamment d'éléments autoporteurs dans l'industrie électrique (pour la fabrication d'armements, de lignes isolantes), etc.

## Revendications

1. Procédé perfectionné pour la fabrication d'une structure moulée élastique complexe du type sandwich, constituée par un noyau de mousse de polyuréthanne (10) entouré d'une peau, et dont partie du moins est armée d'une nappe textile de renfort (5, 6, 18, 22) imprégnée d'une résine époxyde adhérante à ladite mousse de polyuréthanne, consistant :
- à déposer dans un moule (1) destiné à être fermé par un couvercle (2), et au voisinage de chacune des deux faces principales intérieures (1, 2) de ce moule, un ensemble de renfort comprenant un élément de rigidification (12) et des nappes textiles imprégnées d'une résine époxyde (5, 6, 18, 22);
- à fermer le couvercle (2) du moule (1) de manière à définir avec ledit ensemble un volume correspondant au volume du noyau à réaliser;
- puis, à injecter dans le volume ainsi défini un polyol et un isocyanate, réagissant pour former la mousse de polyuréthanne qui s'expanse et durcit in situ selon une réaction exothermique;
- puis, à laisser refroidir le contenu du moule (1);
- et enfin, à ouvrir le moule pour retirer la structure complexe moulée élastique obtenue, caractérisé en ce que les nappes textiles de renfort (5, 6, 18, 22) sont pré-imprégnées par passage dans un bain de résine époxyde sans solvant, puis essorage et prédurcissement par murissement à température ambiante, conduisant à des nappes non poisseuses à température ambiante.

2. Procédé selon la revendication 1, caractérisé en ce que l'élément de rigidification est constitué par une plaque en aluminium.

3. Procédé selon l'une des revendications 1 et 2, pour la fabrication d'un ski de structure complexe moulée de type sandwich, caractérisé en ce qu'après avoir déposé au fond du moule (1) le premier ensemble de renfort, à savoir respectivement une semelle (15), une nappe textile de renfort (18) et un élément de rigidification (19):
- on dépose orthogonalement à cet ensemble (15, 18, 19) selon les deux plans latéraux du moule (1) des plaques rigides (24) et (25) de manière à former chants;
- on dépose sur cesdits chants (24) et (25) un second élément de rigidification (21) et une seconde nappe textile de renfort (22) pré-imprégnée d'une résine époxyde sans solvant et non poisseuse à température ambiante;
- on dépose sur l'ensemble ainsi réalisé une lame en résine (23);
- puis on injecte dans le volume ainsi défini un polyol et un isocyanate réagissant pour former la mousse de polyuréthanne qui s'expanse et se durcit in situ selon une réaction exothermique;
- et enfin, on laisse refroidir le contenu du moule et l'on retire le ski ainsi obtenu.

## Patentansprüche

1. Verbessertes Verfahren zum Herstellen einer komplexen, elastischen, in Form hergestellten Sandwichstruktur mit einem Kern aus Polyurethanschaum (10), der von einer Haut umgeben ist, und von der zumindest ein Bereich mit einer textilen Verstärkungsschicht (5, 6, 18, 22) armiert ist, die mit einem Epoxidharz imprägniert ist, das am Polyurethanschaum haftet, bestehend aus:
- Einbringen eines Verstärkungszusammenbaus, der ein Versteifungselement (12) und textile, mit einem Epoxidharz imprägnierte Schichten (5, 6, 18, 22) aufweist, in eine, durch einen Deckel (2) verschließbare Form (1), und zwar benachbart zu je einer der beiden inneren Hauptflächen (1, 2) dieser Form;
- Schließen des Deckels (2) der Form (1) derart, daß durch den Zusammenbau ein Volumen umgrenzt wird, das dem Volumen des zu bildenden Kernes entspricht;
- anschließend, Einspritzen eines Polyols und eines Isocyanates in das so umgrenzte Volumen, wobei diese unter Bildung des Polyurethanschaumes, der sich in situ ausdehnt und aushärtet, in einer exothermen Reaktion miteinander reagieren;
- daraufhin, Abkühlenlassen des Inhaltes der Form (1);
- und, schließlich, Öffnen der Form, um die erhaltene, elastische, geformte, komplexe Struktur zu entnehmen, dadurch gekennzeichnet, daß die textilen Verstärkungsschichten (5, 6, 18, 22) mittels Durchlaufen eines Bades an lösungsmittelfreiem Expoxidharz vorimprägniert werden, anschließend durch Reifen bei Raumtemperatur trocknen und vorhärten, was zu bei Raumtemperatur nichtklebrigen Schichten führt.

2. Verfahren nach Anspruch 1, dadurch gekennzeichnet, daß das Versteifungselement durch eine Aluminiumplatte gebildet wird.

3. Verfahren nach Anspruch 1 oder 2 zum Herstellen eines Ski's mit in Form hergestellter, komplexer Sandwichstruktur, dadurch gekennzeichnet, daß, nachdem auf dem Boden der Form (1) der erste Verstärkungszusammenbau, nämlich eine Grundplatte (15), eine textile Verstärkungsschicht (18) und ein Versteifungselement (19) gelegt wurde,

– senkrecht zu diesem Zusammenbau (15, 18, 19) entlang den beiden Seitenebenen der Form (1) steife Platten (24) und (25) eingebracht werden, um Seitenkanten zu bilden;

– daß auf die Seitenkanten (24) und (25) ein zweites Versteifungselement (21) und eine zweite, in einem lösungsmittelfreien Epoxidharz vorimprägnierte und bei Raumtemperatur nichtklebrige textile Verstärkungsschicht gelegt werden;

– daß auf den so gebildeten Zusammenbau ein Blatt (23) aus Harz gelegt wird;

– daß anschließend in das so umgrenzte Volumen ein Polyol und ein Isocyanat eingespritzt wird, die unter Bildung des Polyurethanschaumes, der sich in situ ausdehnt und aushärtet, in einer exothermen Reaktion miteinander reagieren;

– und daß schließlich der Inhalt der Form abkühlen gelassen wird und man den so erhaltenen Ski entnimmt.

**Claims**

1. A improved process for producing a complex elastic molded structure of the sandwich type, consisting of a core of polyurethane foam (10) surrounded by a skin, of which at least a part is reinforced with a reinforcing textile sheet (5, 6, 18, 22) impregnated with an epoxy resin adhering to said polyurethane foam, which process consists in:

– depositing in a mold (1) intended to be closed by a cover (2), adjacent each of the two main inner faces (1, 2) of this mold, a reinforcing assembly comprising a stiffening element (12) and textile sheets (5, 6, 18, 22) impregnated with epoxy resin;

– closing the cover (2) of the mold (1) so as to define together with said assembly a volume corresponding to the volume of the core which is to be formed;

– then, injecting into the volume thus defined a polyol and an isocyanate, which react so as to form the polyurethane foam wich expands and hardens in situ by an exothermic reaction;

– then, allowing the content of the mold (1) to cool;

– and finally, opening the mold to withdraw the resulting elastic complex molded structure, characterized in that the reinforcing textile sheets (5, 6, 18, 22) are pre-impregnated by passing in a bath of solventless epoxy resin, then drying and pre-hardening by maturing at ambient temperature, leading to non-tacky sheets at ambient temperature.

2. A process according to claim 1, wherein the stiffening element consists in an aluminium plate.

3. A process according to one of claims 1 and 2, for producing a ski of complex molded structure of the sandwich type, characterized in that after depositing on the bottom of the mold (1) the first reinforcing assembly, respectively a sole (15), a reinforcing textile sheet (18) and a stiffening element (19), it consists in:

– depositing rigid plates (24, 25) at right angles with this assembly (15, 18, 19) along the two side flanks of the mold, in such a manner as to form edges;

– depositing a second stiffening element (21) and a second reinforcing textile sheet (22) pre-impregnated with a solventless epoxy resin non-tacky at ambient temperature on these edges (24, 25);

– laying a resin sheet (23) on the assembly thus realized;

– then injecting in the volume thus defined a polyol and an isocyanate, reacting in order to form the polyurethane form which expands and hardens in situ by an exothermic reaction;

– and finally, allowing the content of the mold to cool and withdrawing the ski thus obtained.

FIG. 1

FIG.2

FIG. 3